# EUROPÄISCHE PATENTSCHRIFT

(11) **EP 0 855 769 B1**
(45) Veröffentlichungstag und Bekanntmachung des Hinweises auf die Patenterteilung: **23.03.2005**
(21) Anmeldenummer: 98100490.6
(22) Anmeldetag: 14.01.1998
(51) Int. Cl.: H01S 3/06, H01S 3/121, H01S 3/113, H01S 3/083

(54) **Monolithischer, nichtplanarer Ringlaser mit Güteschaltung im Einfrequenzbetrieb**
Q-switched single frequency monolitic, non planar ring laser
Laser monolithique en anneau non plan à déclenchement à fréquence unique

(30) Priorität: 25.01.1997 DE 19702681
(43) Veröffentlichungstag der Anmeldung: 29.07.1998
(73) Patentinhaber: InnoLight Innovative Laser und Systemtechnik GmbH, 30419 Hannover (DE)
(72) Erfinder: Freitag, Ingo, Dr., 30419 Hannover (DE); Tünnermann, Andreas, Dr., 30177 Hannover (DE)
(74) Vertreter: Leine, Sigurd, Dipl.-Ing.

(56) Entgegenhaltungen:
- DE-A- 4 008 226
- US-A- 4 578 793
- US-A- 4 955 034
- EICHLER H J ET AL: "Er:YAG-laser at 2.94 mum Q-switched by a FTIR-shutter with silicon output coupler and polarizer" OPTICAL MATERIALS,NL,ELSEVIER SCIENCE PUBLISHERS B.V. AMSTERDAM, Bd. 5, Nr. 4, 1. Mai 1996 (1996-05-01), Seiten 259-265, XP004080487 ISSN: 0925-3467
- BRAUN B ET AL: "SINGLE-FREQUENCY Q-SWITCHED RING LASER WITH AN ANTIRESONANT FABRY-PEROT SATURABLE ABSORBER" OPTICS LETTERS,US,OPTICAL SOCIETY OF AMERICA, WASHINGTON, Bd. 20, Nr. 9, 1. Mai 1995 (1995-05-01), Seiten 1020-1022, XP000503702 ISSN: 0146-9592
- SHIQUN LI ET AL.: "Self-Q-switched diode-end-pumped Cr,Nd:YAG laser with polarized output" OPTICS LETTERS, Bd. 18, Nr. 3, 1. Februar 1993 (1993-02-01), Seiten 203-204, XP002144744
- ZAYHOWSKI J J ET AL: "DIODE-PUMPED PASSIVELY Q-SWITCHED PICOSECOND MICROCHIP LASERS" OPTICS LETTERS,US,OPTICAL SOCIETY OF AMERICA, WASHINGTON, Bd. 19, Nr. 18, 15. September 1994 (1994-09-15), Seiten 1427-1429, XP000445454 ISSN: 0146-9592
- L. FULBERT ET AL.: "passively-Q-switched monolithic microchip laser" CONFERENCE ON LASERS AND ELECTRO-OPTICS (CLEO'95, BALTIMORE), 22. - 26. Mai 1995, Seite 176 XP002144745

## Beschreibung

Die Erfindung betrifft einen monolithischen, nichtplanaren Ringlaser gemäß Oberbegriff des Anspruchs 1.

Durch die US-PS 4,797,896 ist ein monolithischer, nichtplanarer Ringlaser im kontinuierlichen Einfrequenzbetrieb bekannt, der allerdings den Nachteil hat, dass ein Pulsbetrieb nicht möglich ist, was bedeutet, dass keine hohen Spitzenleistungen realisierbar sind.

Aus "Optics Letters", Vol. 20, Nr. 9, S. 1020-1022, ist ein monolithischer, nichtplanarer Ringlaser bekannt, bei dem ein sättigbarer Absorber dicht an eine Totalreflexionsoberfläche gebracht wird. Das Absorbermaterial besteht aus dünnen Schichten aus In-GaAs/GaAs, die auf einem Spiegel aus GaAs/AIAs aufgebracht wurden. Der so entstandene sättigbare Absorber hat einen Brechungsindex, der sehr viel größer ist als der Brechungsindex des Lasermaterials (für Nd: YAG 1,82). Durch diesen hohen Brechungsindexunterschied bleibt die Bedingung für Totalreflexion an der Oberfläche des Laserkristalls erhalten. Der sättigbare Absorber befindet sich mithin außerhalb des Laserresonators.

Sättigung des Absorbers erfolgt nur durch das evaneszente Feld, das bei hinreichender Annäherung des Absorbers an die Oberfläche des Laserkristalls in den Absorberkristall einkoppelt. Hierüber wird das Schalten des Absorberkristalls erreicht und durch die Verlustmodulation ein Pulsbetrieb des Lasers erzielt.

Aus "Optics Letters", Vo. 19, Nr. 18, S. 1427-1429 und Vol. 18, Nr. 3, S. 203-204 sowie Vol. 18, Nr. 17, S. 1418-1419, sind ein gütegeschalteter Mikrochip-Laser mit einem resonatorinternen, sättigbaren Absorber bzw. eine Güteschaltung von Cr,Nd:YAG-Festkörperlasern, deren aktives Medium sättigbare Verluste auf dem Laserübergang aufweist, bekannt. Mit diesen durch diese Veröffentlichungen bekannten Lasern sind keine hohen mittleren Leistungen im Einfrequenzberieb realisierbar.

Durch die EP 0 272 912 ist eine Güteschaltung konventioneller Festkörperlaser durch akustooptische bzw. separate sättigbare Absorber im Laserresonator bekannt. Nachteilig ist der diskrete Aufbau, wodurch die Stabilität und die Effizienz reduziert werden. Einfrequenzbetrieb ist nur durch hohen technischen Aufwand oder nur bis zu kleinen Leistungen möglich.

Die Aufgabe der vorliegenden Erfindung besteht darin, einen Ringlaser der eingangs genannten Art so auszubilden, dass leistungsstarke Laserimpulse im hochstabilen Einfrequenzberieb realisierbar sind. Angestrebt wird ferner ein kompakter Aufbau.

Die Aufgabe wird durch die in den Ansprüchen 1, 4 und 11 angegebenen Erfindungen gelöst.

Vorteilhafte und zweckmäßige Weiterbildungen der erfindungsgemäßen Aufgabenlösung sind in den Unteransprüchen angegeben.

Der erfindungsgemäße nichtplanare monolithische Ringlaser ermöglicht durch aktive oder passive Güteschaltung die effiziente Erzeugung kurzer, leistungsstarker Laserimpulse im hochstabilen Einfrequenzbetrieb. Durch die Kombination von Pulsrepetitionsraten im kHz-Bereich und einer geringen Resonatorlänge werden Nanosekundenpulse mit Spitzenleistungen im KW-Bereich realisiert.

Aufgrund der monolithischen Struktur des Lasers wird ein kompakter Aufbau und eine hohe Stabilität und Zuverlässigkeit erzielt. Die vorgesehene Anregung (longitudinal) mit einem Diodenlaser ermöglicht eine hohe elektrischoptische Gesamteffizienz. Modenselektives Pumpen erzwingt die Emission der transversalen Grundmode mit beugungsbedingter Strahlqualität. Insgesamt kann die optische Anregung mit bis zu 4 Diodenlasern über den Einkoppelspiegel des Ringlasers erfolgen.

Die Erfindung soll nachfolgend anhand der beigefügten Zeichnungen näher erläutert werden.

Es zeigt
- Fig. 1: den prinzipiellen Aufbau zur modenselektiven Anregung eines monolithischen, nicht-planaren Ringlasers mit einem Diodenlaser,
- Fig. 2: eine typische Geometrie eines bekannten, monolithischen Ringlasers mit nichtplanarem Strahlenverlauf (Fig. 2a - perspektivische Darstellung; Fig. 2b - Draufsicht; Fig. 2c - Vorderansicht und Fig. 2d - Seitenansicht),
- Fig. 3: die Auskopplung eines evaneszenten Feldes durch Frustration der Totalreflexion bei einem erfindungsgemäßen Ringlaser,
- Fig. 4: einen nichtplanaren Ringlaser mit einem diffusionsgebondeten Kristall, der aus zwei Teilen eines laseraktiven Materials und aus einem Teil eines sättigbaren Absorbers bestehet (Fig. 4a - perspektivische Darstellung; Fig. 4b - Draufsicht; Fig. 4c - Vorderansicht und Fig. 4d - Seitenansicht), und
- Fig. 5: eine weitere Ausführung eines erfindungsgemäßen monolithischen, nichtplanaren Ringlasers mit Güteschaltung (Fig. 5a - perspektivische Darstellung; Fig. 5b - Draufsicht; Fig. 5c - Vorderansicht und Fig. 5d - Seitenansicht).

Gleiche Bauteile in den Figuren der Zeichnungen sind mit den gleichen Bezugszeichen versehen.

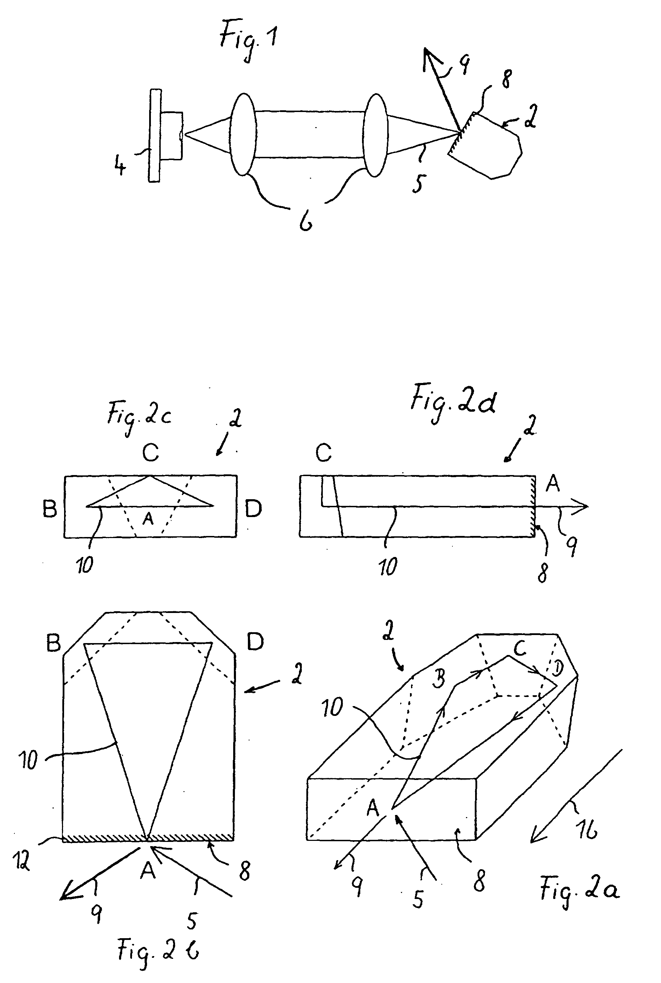

Die Fig. 1 zeigt den prinzipiellen Aufbau eines monolithischen, nichtplanaren Ringlasers mit einem Ringlaserkristall 2 als monolithischem Resonator und einem Diodenlaser 4 zur modenselektiven Anregung, dessen Pumplicht 5 mit Hilfe einer Pumplichttransferoptik 6 auf den Ringlaserkristall 2 fokussiert wird. Über einen Ein- und Auskoppelspiegel 8 wird das Pumplicht 5 eingekoppelt und das Laserlicht 9 ausgekoppelt. Die longitudinal erfolgende Anregung ermöglicht eine hohe elektrisch-optische Gesamteffizienz. Das modenselektive Pumpen erzwingt die Emission in der transversalen Grundmode mit beugungsbegrenzter Strahlqualität. Die optische Anregung kann mit bis zu vier Diodenlasern über den Einkoppelspiegel des Ringlasers erfolgen.

Einfrequenzbetrieb wird durch eine interne optische Diode erzeugt. Hierzu wird im monolithischen Resonator (Ringlaserkristall 2), vgl. Fig. 1 und 2, ein nichtebener Strahlenverlauf 10 realisiert, der eine reziproke Drehung der Polarisation bewirkt. Der Laserstrahl 9 erfährt dabei zumindest an drei Flächen B, C und D, siehe Fig. 2, im Laserkristall 2 eine interne Totalreflexion. Außerdem erfolgt die Reflexion an einer Kriställfläche A, siehe Fig. 2, die mit wenigstens einer dielektrischen Schicht 12 versehen ist und den Ein- und Auskoppelspiegel 8 des Lasers bildet. Die dielektrischen Schichten 12 gewährleisten einerseits eine hohe Transmission und damit eine effiziente Einkopplung des Pumplichtes des Diodenlasers 4; andererseits bestimmen sie den Auskoppelgrad der Laserstrahlung. Ferner wird der Faraday-Effekt im Lasermedium genutzt, um in einem permanenten Magnetfeld 16 eine nichtreziproke Polarisationsdrehung zu gewährleisten. Durch unterschiedliche Verluste des Auskoppelspiegels 8 für s- bzw. p-Polarisation wird somit eine Verlustdifferenz der beiden Umlaufrichtungen im Ringlaser erreicht, so daß nur die Umlaufrichtung mit den geringeren Verlusten oszilliert. In homogen verbreiterten Medien wird damit gleichzeitig auch ein Einfrequenzbetrieb erzwungen.

Nachfolgend sollen anhand der Figuren 2, 3, 4 und 5 Güteschaltungen zur Erzeugung kurzer Impulse in den erfindungsgemäßen nichtplanaren Ringlasern erläutert werden.

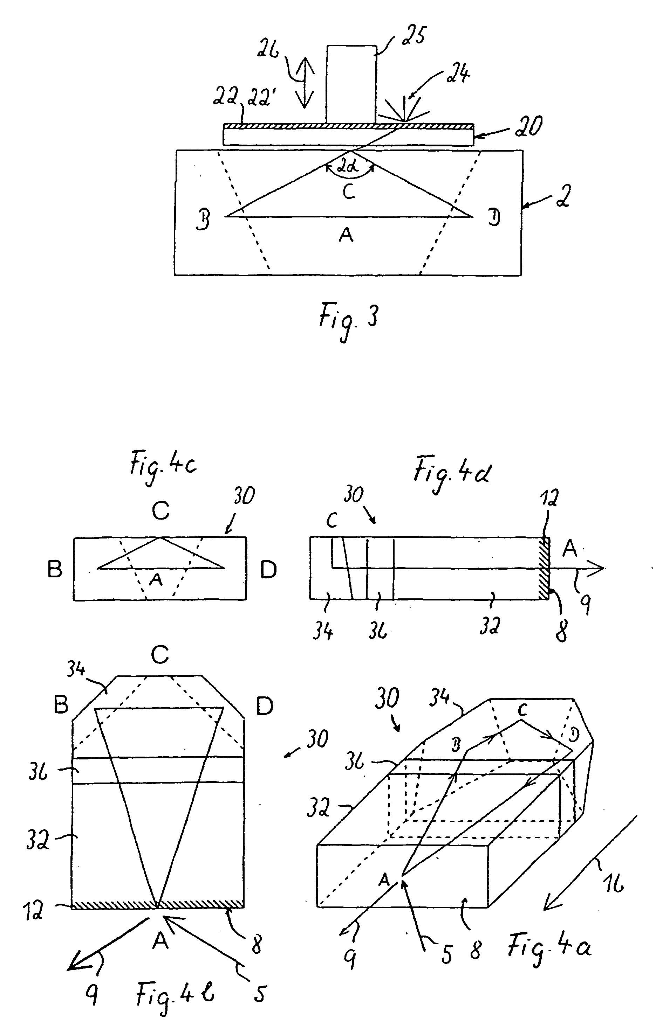

### 1. Monolithischer, nichtplanarer Ringlaser mit aktiver Güteschaltung durch frustrierte Totalreflexion (Fig. 3).

Der Strahlengang bekannter, monolithischer Ringlaser wird durch mehrere Totalreflexionen im aktiven Medium realisiert, vgl. Fig. 2. Bei Annäherung eines erfindungsgemäß vorgesehenen Schaltkristalles 20 aus einem Medium mit geeignetem Brechungsindex, vgl. Fig. 3, auf etwa eine Wellenlänge der Laserstrahlung an eine der Reflexionsflächen - in der Fig. 3 der Fläche C - wird das evaneszente Feld aus dem Laserresonator 2 ausgekoppelt (Frustration der Totalreflexion an der Fläche C). Die Laserstrahlung erfährt in diesem Fall hohe Verluste, und die Güte des Resonators 2 wird reduziert. Die hohen Verluste führen zu einer großen Schwellinversionsdichte im Lasermedium, so daß bei kontinuierlicher Anregung des aktiven Mediums eine große Energie gespeichert werden kann, bevor es zur Laseremission kommt. Bei Entfernung des Schaltkristalls 20 von der Fläche C werden die Bedingungen der Totalreflexion wieder erfüllt, die Güte des Resonators nimmt schnell einen hohen Wert an, und es wird aufgrund der hohen Inversion ein kurzer, leistungsstarker Laserimpuls erzeugt. Die Güteschaltung kann für beliebige Materialien des aktiven Mediums erfolgen. Als Schaltkristall bieten sich einerseits Kristalle aus dem Lasermaterial, aus dem der Ringlaser gefertigt ist, an, die zur Erzeugung hoher Verluste auf der dem Laserkristall abgeneigten Seite mit einer Aufrauhung 22 zur Erzeugung einer diffusen Reflexion 24 oder mit einer dielektrischen Antireflexschicht 22' für die Laserwellenlänge zur Verhinderung von Reflexionen versehen sind. Andererseits können aber eine Vielzahl anderer Materialien für den Schaltkristall verwendet werden, deren Brechungsindex größer ist als n sinα, wobei α der Einfallswinkel des Laserstrahls am Punkt der Totalreflexion und n der Brechungsindex des Ringlaserkristalls ist. Die Frustrierung der Totalreflexion und damit die Modulation der Resonatorgüte kann durch Verwendung von Piezokeramiken 25 zur Bewegung (Pfeil 26) des Mediums 20 mit Pulsrepetitionsraten bis in den Bereich von mehreren kHz erfolgen. Es handelt sich um eine aktive Güteschaltung, bei der die Pulsrepetitionsrate durch ein externes, elektrisches Signal an die Piezokeramik 25 eingestellt werden kann. Da keine Komponenten zur Güteschaltung in den Resonator 2 eingebracht werden müssen, werden hohe Effizienz, Stabilität und Zuverlässigkeit gewährleistet.

### 2. Monolithischer, nichtplanarer Ringlaser mit passiver Güteschaltung durch aktives Lasermedium, das sättigbare Verluste aufweist.

Der Aufbau dieses Ringlasers ist analog zu dem bekannten monolithischen Ringlaser gemäß Fig. 2. Erfindungsgemäß wird hier allerdings ein aktives Lasermedium verwendet, das gleichzeitig sättigbare Verluste auf dem Laserübergang, d. h. bei der Wellenlänge der Laseremission aufweist. Die hohen Verluste führen zu einer hohen Schwellinversionsdichte im Lasermedium. Bei Erreichung dieser Schwellinversion baut sich im Resonator 2 ein Photonenfeld auf, welches das Lasermaterial schnell ausbleicht, d. h. die sättigbaren Verluste reduziert und damit die Güte des Resonators erhöht. Es handelt sich hierbei um eine passive Güteschaltung, bei der die Pulswiederholfrequenz nicht durch ein externes Signal gesteuert werden kann. Allerdings besteht ein linearer Zusammenhang zwischen der Pulsrepetitionsrate und der Pumpleistung, so daß diese Rate über weite Bereiche eingestellt werden kann. Zudem lassen sich für eine gegebene Pumpleistung die Pulsparameter durch geeignete Wahl der Parameter des Lasermediums einstellen. Aufgrund der Notwendigkeit zur Realisierung einer optischen Diode sind für den Laser allerdings nur Materialien geeignet, die keine natürliche Doppelbrechung aufweisen, d. h. u.a. isotrope Standardlasermaterialien mit Codotierung wie Cr, Nd:YAG.

### 3. Monolithischer, nichtplanarer Ringlaser mit passiver Güteschaltung durch resonatorinternen, sättigbaren Absorber (Fig. 4).

Der Aufbau dieses Ringlasers ist grundsätzlich analog zu dem bekannten, monolithischen Ringlaser nach Fig. 2. Allerdings wird erfindungsgemäß vorwiegend ein Ringlaserkristall 30 aus einem Festkörpermaterial verwendet, das aus zumindest einem Kristall, vorliegend zwei Kristallen 32, 34 aus aktivem Lasermaterial (z. B. Nd:YAG) und einem vorzugsweise zwischen den beiden Kristallen 32 und 34 angeordneten Kristall 36 aus einem sättigbaren Absorbermaterial (z. B. Cr⁴⁺:YAG) besteht, siehe Fig. 4. Zur Realisierung der internen optischen Diode besteht zumindest einer der Kristalle aus einem Material, das bei der Laserwellenlänge eine Drehung der Polarisationsrichtung des Lichtes über den Faradayeffekt ermöglicht. Günstig ist die Verwendung eines aktiven Mediums mit Faradayeffekt, z. B. Nd:YAG. Die räumliche Trennung der Lasertätigkeit in den beiden Kristallen 32 und 34 aus aktivem Medium und der sättigbaren Verluste im Absorber 36 ermöglicht eine unabhängige Optimierung der Parameter für einen effizienten Laser- und Pulsbetrieb. Die Kristalle werden durch Diffusionsbonden in Verbindung gebracht. Durch das Diffusionsbonden werden an der Grenzfläche zwischen den Materialien atomare Bindungen eingegangen und die entstehende Struktur verhält sich makroskopisch wie ein Kristall. Durch die Verbindung mittels Diffusionsbonden entstehen an der Grenzfläche keine optischen Verluste und verhält sich der Kristall beim Polieren wie Standardlasermaterial. Günstig ist die Verwendung der oben schon erwähnten Anordnung aus aktivem Medium 32 / sättigbarem Absorber 36 / aktivem Medium 34 gemäß Fig. 4. Die Länge des mit einer dielektrischen Beschichtung 12 (Ein- und Auskoppelspiegel 8) versehenen Mediums bzw. Kristalls 32 wird vorzugsweise entsprechend etwa einer Absorptionslänge im aktiven Medium gewählt und beträgt beispielsweise einige Millimeter, z. B. 2 - 4 mm. Hierdurch wird eine effiziente Absorption der Pumpstrahlung 5 gewährleistet und gleichzeitig verhindert, daß hohe Intensitäten der Pumpstrahlung im sättigbaren Absorber 36 dessen Schalteigenschaften beeinflussen. Die Länge des sättigbaren Absorbers 36 wird durch die gewünschten Schalteigenschaften bestimmt und liegt etwa im Bereich von 1 - 3 mm. Die Länge des aktiven Mediums, d. h. des Kristalles 34 mit den Flächen B, C und D zur internen Totalreflexion wird wesentlich durch fertigungstechnische Eigenschaften festgelegt.

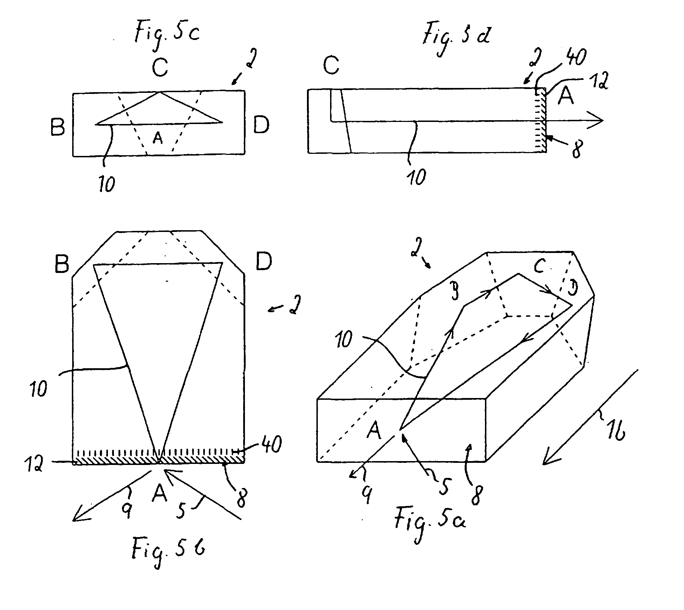

### 4. Monolithischer, nichtplanarer Ringlaser mit passiver Güteschaltung durch eine dünne Schicht aus sättigbarem Absorbermaterial auf wenigstens einer Oberfläche des Ringlaserkristalls (Fig. 5)

Der Aufbau dieses Ringlasers ist grundsätzlich analog zu dem bekannten, monolithischen Ringlaser nach Fig. 2. Allerdings wird erfindungsgemäß zumindest eine der Oberflächen A, B, C, D des Ringlasermaterials (z. B. Nd:YAG) mit einer dünnen Schicht 40 aus sättigbarem Absorbermaterial (z.B. Cr⁴⁺:YAG) versehen. Das Absorbermaterial mit einer Dicke von typisch einige 100µm (vorzugsweise 100µm oder 200 µm) wird vorzugsweise mit einem Epitaxieverfahren aufgebracht. Bei geeigneter Wahl von Ringlasermaterial und Absorbermaterial (z. B. Nd:YAG und Cr:⁴⁺:YAG) wachsen bei diesem Verfahren die Schichten des Absorbermaterials entsprechend der Kristallstruktur des Ringlaserkristalls auf, so daß sich ein monolithischer Block des Laserkristalls ergibt. Dieser kann anschließend wie konventionelles Lasermaterial bearbeitet (z. B. optisch poliert) werden. Günstig erweist sich die Aufbringung des Absorbermaterials auf die als Ein- und Auskoppelspiegel 8 ausgebildete Oberfläche A des Ringlaserkristalls. Das Absorbermaterial kann auch auf einer der Flächen B, C, D der Totalreflexionen oder auf mehrere Flächen oder sämtliche Flächen A, B, C, D aufgebracht werden. In diesem Falle können bereits vorgefertigte, konventionelle Ringlaserkristalle nach Fig. 2 nachträglich durch Aufbringung einer Schicht aus sättigbarem Absorbermaterial auf eine Güteschaltung umgestellt werden. Die anschließend notwendige Feinpolitur und dielektrische Beschichtung dieser Oberfläche ist fertigungstechnisch unkritisch.

## Patentansprüche

1. Monolithischer, nichtplanarer Ringlaser mit einer Güteschaltung im Einfrequenzbetrieb, mit einem Diodenlaser als Pumplichtquelle, dessen Pumplicht in einen Ringlaserkristall (2) eingekoppelt wird, welcher wenigstens drei Totalreflexionsflächen (B, C, D) und eine als Einund Auskopplungsspiegel (8) ausgebildete, dielektrisch beschichtete Kristallfläche (A) aufweist und durch einen nichtebenen Strahlenverlauf eine reziproke Drehung der Polarisationsrichtung des Laserlichtes verursacht und über den Faradayeffekt in einem permanenten Magnetfeld (16) eine nichtreziproke Drehung der Polarisationsrichtung des Laserlichtes bewirkt, **dadurch gekennzeichnet, dass** der Ringlaserkristall (2) aus einem Lasermaterial besteht, das sättigbare Verluste auf dem Laserübergang, d.h. der Wellenlänge der Laseremission, aufweist.

2. Ringlaser nach Anspruch 1, **dadurch gekennzeichnet, dass** das Ringlasermaterial aus einem keine natürliche Doppelbrechung aufweisenden Material besteht.

3. Ringlaser nach Anspruch 2, **dadurch gekennzeichnet, dass** das Material Cr,Nd:YAG, Cr,Yb:YAG oder Cr,Nd: LSB ist.

4. Monolithischer, nichtplanarer Ringlaser mit einer Güteschaltung im Einfrequenzbetrieb, mit einem Diodenlaser als Pumplichtquelle, dessen Pumplicht in einen Ringlaserkristall (30) eingekoppelt wird, welcher wenigstens drei Totalreflexionsflächen (B, C, D) und eine als Einund Auskopplungsspiegel (8) ausgebildete, dielektrisch beschichtete Kristallfläche (A) aufweist und durch einen nichtebenen Strahlenverlauf eine reziproke Drehung der Polarisationsrichtung des Laserlichtes verursacht und über den Faradayeffekt in einem permanenten Magnetfeld (16) eine nichtreziproke Drehung der Polarisationsrichtung des Laserlichtes bewirkt, **dadurch gekennzeichnet, dass** der Ringlaserkristall (30) aus einem Kristall (32, 34) aus aktivem Lasermaterial und einem weiteren Kristall (36) aus einem sättigbaren Absorbermaterial besteht.

5. Ringlaser nach Anspruch 4, **dadurch gekennzeichnet, dass** der Ringlaserkristall (30) zwei räumlich getrennte erste und zweite Kristalle (32, 34) aus aktivem Lasermaterial aufweist, zwischen denen ein dritter Kristall (36) aus sättigbarem Absorbermaterial angeordnet ist.

6. Ringlaser nach Anspruch 4 oder 5, **dadurch gekennzeichnet, dass** die Kristalle (32, 34) aus aktivem Lasermaterial mit dem Kristall (36) aus sättigbarem Absorbermaterial durch Diffusionsbonden verbunden sind.

7. Ringlaser nach Anspruch 4, **dadurch gekennzeichnet, dass** die Länge des mit der dielektrischen Beschichtung (12) versehenen Kristalls (32) etwa einer Absorptionslänge im aktiven Material entspricht.

8. Ringlaser nach einem der Ansprüche 4 bis 7, **dadurch gekennzeichnet, dass** das Ringlasermaterial aus einem keine natürliche Doppelbrechung aufweisenden Material besteht.

9. Ringlaser nach einem der Ansprüche 4-8, **dadurch gekennzeichnet, dass** das aktive Lasermaterial Nd:YAG, Yb:YAG oder Nd:LSB ist.

10. Ringlaser nach einem der Ansprüche 4 bis 9, **dadurch gekennzeichnet, dass** das sättigende Absorbermaterial Cr⁴⁺:YAG ist.

11. Monolithischer, nichtplanarer Ringlaser mit einer Güteschaltung im Einfrequenzbetrieb, mit einem Diodenlaser als Pumplichtquelle, dessen Pumplicht in einen Ringlaserkristall (2) eingekoppelt wird, welcher wenigstens drei Totalreflexionsflächen (B, C, D) und eine als Einund Auskopplungsspiegel ausgebildete, dielektrische Kristallfläche (12) aufweist und durch einen nichtebenen Strahlenverlauf eine reziproke Drehung der Polarisationsrichtung des Laserlichtes verursacht und über den Faradayeffekt in einem permanenten Magnetfeld (16) eine nichtreziproke Drehung der Polarisationsrichtung des Laserlichtes bewirkt, **dadurch gekennzeichnet, dass** der Ringlaserkristall (2) aus einem Kristall aus aktivem Lasermaterial besteht, bei dem auf mindestens einer Oberfläche (A, B, C, D) eine Schicht (40) aus einem sättigbaren Absorbermaterial direkt aufgebracht ist, so daß der sättigbare Absorber und der Laserkristall einen monolithisehen Block bilden und sich der Absorber innerhalb der Laserkavität befindet.

12. Ringlaser nach Anspruch 11, **dadurch gekennzeichnet, dass** die Schicht (40) aus Absorbermaterial wenigstens 100 µm dick ist, vorzugsweise 100 µm oder 200 µm.

13. Ringlaser nach einem der Ansprüche 11 oder 12, **dadurch gekennzeichnet, dass** die Schicht (40) aus Absorbermaterial mit einem Epitaxieverfahren aufgebracht wird.

14. Ringlaser nach einem der Ansprüche 11 bis 13, **dadurch gekennzeichnet, dass** die Schicht (40) aus Absorbermaterial auf der Oberfläche (A) des Ringlaserkristalls (2) aufgebracht ist, die als Ein- und Auskoppelspiegel (8) ausgebildet ist.

15. Ringlaser nach einem der Ansprüche 11 bis 13, **dadurch gekennzeichnet, dass** die Schicht (40) auf mehreren oder sämtlichen Oberflächen (A, B, C, D) angeordnet ist.

16. Ringlaser nach einem der Ansprüche 11 bis 15, **dadurch gekennzeichnet, dass** das Ringlasermaterial aus einem keine natürliche Doppelbrechung aufweisenden Material besteht.

17. Ringlaser nach einem der Ansprüche 11 bis 16, **dadurch gekennzeichnet, dass** das Ringlasermaterial Nd:YAG, Yb:YAG oder Nd:LSB ist.

18. Ringlaser nach einem der Ansprüche 11 bis 17, **dadurch gekennzeichnet, dass** das sättigbare Absorbermaterial der Schicht (40) Cr⁴⁺:YAG ist.

## Claims

1. Monolithic, non-planar ring laser with single-frequency Q-switching, comprising a diode laser as a pump light source, the pump light of which is coupled to a ring laser crystal (2) that comprises at least three total reflection faces (B, C, D) and a dielectrically coated crystal face (A) designed as a coupling and decoupling mirror (8), and by means of a non-planar ray path causes a reciprocal rotation of the polarisation direction of the laser light and by means of the Faraday effect in a permanent magnetic field (16) produces a non-reciprocal rotation of the polarisation direction of the laser light, **characterised in that** the ring laser crystal (2) is made of a laser material having saturable losses at the laser transition, i.e. the wavelength of the laser emission.

2. Ring laser according to claim 1, **characterised in that** the ring laser material is made from a material lacking natural birefringence.

3. Ring laser according to claim 2 **characterised in that** the material is Cr,Nd:YAG, Cr,Yb:YAG or Cr,Nd:LSB.

4. Monolithic, non-planar ring laser with single-frequency Q-switching, comprising a diode laser as a pump light source, the pump light of which is coupled to a ring laser crystal (30) that comprises at least three total reflection faces (B, C, D) and a dielectrically coated crystal face (A) designed as a coupling and decoupling mirror (8), and by means of a non-planar ray path causes a reciprocal rotation of the polarisation direction of the laser light and by means of the Faraday effect in a permanent magnetic field (16) produces a non-reciprocal rotation of the polarisation direction of the laser light, **characterised in that** the ring laser crystal (30) comprises a crystal (32, 34) made of an active laser material and a further crystal (36) made of a saturable absorber material.

5. Ring laser according to claim 4, **characterised in that** the ring laser crystal (30) comprises two spatially separated first and second crystals (32, 34) made of active laser material, between which a third crystal (36) made of a saturable absorber material is disposed.

6. Ring laser according to claim 4 or 5, **characterised in that** the crystals (32, 34) made of active laser material are joined with the crystal (36) made of saturable absorber material by diffusion bonding.

7. Ring laser according to claim 4, **characterised in that** the length of the crystal (32) provided with the dielectric coating (12) corresponds approximately to an absorption length in the active material.

8. Ring laser according to one of claims 4 to 7, **characterised in that** the ring laser material is a material lacking natural birefringence.

9. Ring laser according to one of claims 4-8, **characterised in that** the active laser material is Nd:YAG, Yb:YAG or Nd:LSB.

10. Ring laser according to one of claims 4 to 9, **characterised in that** the saturating absorber material is Cr⁴⁺ :YAG.

11. Monolithic, non-planar ring laser with single-frequency Q-switching, comprising a diode laser as a pump light source, the pump light of which is coupled to a ring laser crystal (2) that comprises at least three total reflection faces (B, C, D) and a dielectrically coated crystal face (A) designed as a coupling and decoupling mirror (8), and by means of a non-planar ray path causes a reciprocal rotation of the polarisation direction of the laser light and by means of the Faraday effect in a permanent magnetic field (16) produces a non-reciprocal rotation of the polarisation direction of the laser light, **characterised in that** the ring laser crystal (2) is made from a crystal of active laser material, in which on at least one surface (A, B, C, D) a layer (40) of saturable absorber material is applied directly, so that the saturable absorber and the laser crystal form a monolithic block and the absorber is located inside the laser cavity.

12. Ring laser according to claim 11, **characterised in that** the layer (40) of absorber material is at least 100 µm thick, preferably 100 µm or 200 µm.

13. Ring laser according to one of claims 11 or 12, **characterised in that** the layer (40) of absorber material is applied by means of an epitaxy process.

14. Ring laser according to one of claims 11 to 13, **characterised in that** the layer (40) of absorber material is applied onto the surface (A) of the ring laser crystal (2) which is in the form of a coupling and uncoupling mirror (8).

15. Ring laser according to one of claims 11 to 13, **characterised in that** the layer (40) is positioned on several or all surfaces (A, B, C, D).

16. Ring laser according to one of claims 11 to 15, **characterised in that** the ring laser is made from a material lacking natural birefringence.

17. Ring laser according to one of claims 11 to 16, **characterised in that** the ring laser material is Nd:YAG, Yb:YAG or Nd:LSB.

18. Ring laser according to one of claims 11 to 17, **characterised in that** the saturable absorber material of the layer (40) is Cr⁴⁺ :YAG.

## Revendications

1. Laser monolithique en anneau et non plan à déclenchement à fréquence unique, comprenant un laser à diode comme source de lumière de pompage, dont la lumière de pompage est introduite dans un cristal de laser en anneau (2), lequel présente au moins trois surfaces de réflexion totale (B, C, D) et une surface de cristal (A) revêtue d'un diélectrique conçue comme un miroir d'entrée et de sortie (8), entraîne une rotation réciproque du sens de polarisation de la lumière laser en raison d'un tracé de faisceau non plan et réalise une rotation non réciproque du sens de polarisation de 1a lumière laser par l'effet de Faraday dans un champ magnétique (16) permanent, **caractérisé en ce que** le cristal de laser en anneau (2) est constitué d'un matériau de laser qui présente des pertes saturables sur la transition laser, c'est-à-dire la longueur d'onde de l'émission laser.

2. Laser en anneau selon la revendication 1, **caractérisé en ce que** le matériau du laser en anneau est constitué d'un matériau ne présentant pas une double réfraction naturelle.

3. Laser en anneau selon la revendication 2, **caractérisé en ce que** le matériau est du Cr, Nd:YAG, Cr, Yb:YAG ou Cr, Nd:LSB.

4. Laser en anneau monolithique et non plan à déclenchement à fréquence unique, comprenant un laser à diode comme source de lumière de pompage, dont la lumière de pompage est injectée dans un cristal de laser en anneau (30), lequel présente au moins trois surfaces de réflexion totale (B, C, D) et une surface de cristal revêtue d'un diélectrique conçue comme miroir d'entrée et sortie (8), entraîne une rotation réciproque du sens de polarisation de la lumière laser en raison d'un tracé de faisceau non plan et cause une rotation non réciproque du sens de polarisation de la lumière laser par l'effet de Faraday dans un champ magnétique (16) permanent, **caractérisé en ce que** le cristal de laser en anneau (30) comprend un cristal (32, 34) à base de matériau de laser actif et un autre cristal (36) à base d'un matériau absorbant saturable.

5. Laser en anneau selon la revendication 4, **caractérisé en ce que** le cristal de laser en anneau (30) présente deux premier et second cristaux (32, 34) séparés dans l'espace à base de matériau de laser actif, entre lesquels est disposé un troisième cristal (36) à base de matériau absorbant saturable.

6. Laser en anneau selon la revendication 4 ou 5, **caractérisé en ce que** les cristaux (32, 34) à base de matériau de laser actif sont reliés au cristal (36) à base de matériau absorbant saturable par liaison de diffusion.

7. Laser en anneau selon la revendication 4, **caractérisé en ce que** la longueur du cristal (32) pourvu du revêtement (12) diélectrique correspond à peu près à une longueur d'absorption dans le matériau actif.

8. Laser en anneau selon l'une quelconque des revendications 4 à 7, **caractérisé en ce que** le matériau du laser en anneau est consituté d'un matériau ne présentant pas une double réfraction naturelle.

9. Laser en anneau selon l'une quelconque des revendications 4 à 8, **caractérisé en ce que** le matériau de laser actif est du Nd:YAG, Yb:YAG ou Nd:LSB.

10. Laser en anneau selon l'une quelconque des revendications 4 à 9, **caractérisé en ce que** le matériau absorbant saturant est du Cr⁴⁺:YAG.

11. Laser en anneau monolithique et non plan à déclenchement à fréquence unique, comprenant un laser à diode comme source de lumière de pompage, dont la lumière de pompage est injectée dans un cristal de laser en anneau (2), lequel présente au moins trois surfaces de réflexion totale (B, C, D) et une surface de cristal (12) diélectrique, conçue comme un miroir d'entrée et de sortie, entraîne une rotation réciproque du sens de polarisation de la lumière laser en raison d'un tracé de faisceau non plan et provoque une rotation non réciproque du sens de polarisation de la lumière laser par l'effet de Faraday dans un champ magnétique (16) permanent, **caractérisé en ce que** le cristal du laser en anneau (2) comprend un cristal à base de matériau de laser actif, sur lequel une couche (40) à base d'un matériau absorbant saturable est appliquée directement sur au moins une surface (A, B, C, D), de sorte que l'absorbant saturable et le cristal du laser forment un bloc monolithique et que l'absorbant se trouve à l'intérieur de la cavité du laser.

12. Laser en anneau selon la revendication 11, **caractérisé en ce que** la couche (40) à base de matériau absorbant a une épaisseur d'au moins 100 µm, de préférence 100 µm ou 200 µm.

13. Laser en anneau selon l'une quelconque des revendications 11 ou 12, **caractérisé en ce que** la couche (40) à base de matériau absorbant est appliquée avec un procédé d'épitaxie.

14. Laser en anneau selon l'une quelconque des revendications 11 à 13, **caractérisé en ce que** la couche (40) à base de matériau absorbant est appliquée sur la surface (A) du cristal du laser en anneau (2), qui est conçue comme miroir d'entrée et de sortie (8).

15. Laser en anneau selon l'une quelconque des revendications 11 à 13, **caractérisé en ce que** la couche (40) est disposée sur plusieurs ou toutes les surfaces (A, B, C, D).

16. Laser en anneau selon l'une quelconque des revendications 11 à 15, **caractérisé en ce que** le matériau du laser en anneau est constitué d'un matériau ne présentant pas une double réfraction naturelle.

17. Laser en anneau selon l'une quelconque des revendications 11 à 16, **caractérisé en ce que** le matériau du laser en anneau est du Nd:YAG, Yb:YAG ou Nd:LSB.

18. Laser en anneau selon l'une quelconque des revendications 11 à 17, **caractérisé en ce que** le matériau absorbant saturable de la couche (40) est du CR⁴⁺:YAG.
